(19)

Europäisches
Patentamt

European
Patent Office

Office européen
des brevets

(11) **EP 1 783 395 B1**

(12) **EUROPÄISCHE PATENTSCHRIFT**

(45) Veröffentlichungstag und Bekanntmachung des
Hinweises auf die Patenterteilung:
**18.07.2018 Patentblatt 2018/29**

(51) Int Cl.:
***F16D 69/02*** *(2006.01)*

(21) Anmeldenummer: **06017215.2**

(22) Anmeldetag: **18.08.2006**

(54) **Verfahren zur Herstellung von Bremsscheiben**

Process for manufacturing brake disks

Procédé pour fabriquer des disques de frein

(84) Benannte Vertragsstaaten:
**DE FR GB IT**

(30) Priorität: **05.11.2005 DE 102005052802**

(43) Veröffentlichungstag der Anmeldung:
**09.05.2007 Patentblatt 2007/19**

(73) Patentinhaber: **AUDI AG**
**85045 Ingolstadt (DE)**

(72) Erfinder:
• **Kienzle, Andreas, Dr.**
**86753 Möttingen - Balgheim (DE)**

• **Krätschmer, Ingrid**
**86485 Biberach (DE)**

(74) Vertreter: **Bauer, Dominik Michael et al**
**Audi AG**
**Patentabteilung**
**85045 Ingolstadt (DE)**

(56) Entgegenhaltungen:
**WO-A-99/41069    DE-A1- 10 048 012**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung von Carbon-Keramik-Bremsscheiben, also Bremsscheiben aus einem Werkstoff, der mit Fasern aus Kohlenstoff verstärkte keramische Phasen aufweist, insbesondere solche Bremsscheiben, die mehrere Schichten umfassen, wobei mindestens eine Schicht (Tragschicht) als Tragkörper dient und mindestens eine Schicht als Reibschicht fungiert, wobei der Tragkörper und die mindestens eine Reibschicht durch eine Zwischenschicht getrennt sind.

Carbon-Keramik-Bremsscheiben sind unter anderem aus der DE 44 38 455 C1, der WO 99/41069 A, sowie der DE 100 48 012 A1 bekannt.

Es hat sich als vorteilhaft erwiesen, derartige Bremsscheiben aus mehreren zylinderringförmigen Schichten aufzubauen, wobei mindestens eine Schicht als Tragkörper dient, und auf mindestens einer der Deckflächen dieses Tragkörpers eine ebenfalls zylinderringförmige Reibschicht aufgebracht ist. Ein derartiger Aufbau ist in der deutschen Offenlegungsschrift DE 44 38 456 A1 beschrieben,

Dem Tragkörper kommt die Aufgabe zu, das beim Bremsvorgang erzeugte Moment auf die Welle zu übertragen, dazu sind eine hohe Torsionssteifigkeit (Torsionsmodul) und eine hohe Torsionsfestigkeit erforderlich, die auch bei den hohen erreichten Betriebstemperaturen erhalten bleiben. Mit Langfasern verstärkte keramische Werkstoffe (mittlere Faserlänge mindestens 5 mm), deren Matrix bevorzugt Siliciumcarbid enthält, insbesondere in Kombination mit geringen Anteilen an Kohlenstoff und an elementarem Silicium, sind hierfür günstig.

Die Reibschicht steht beim Bremsvorgang im tribologischen Kontakt mit den Bremsbelägen und soll einen möglichst belastungsunabhängigen und temperaturunabhängigen Reibungskoeffizienten in Kombination mit den Bremsbelägen im Bereich von $\mu = 0,4$ bis $0,9$ aufweisen. Weiter soll der Verschleiß gering sein, ebenso wird insbesondere für die Anwendung in Automobilen eine gute Beständigkeit gegen zyklische Temperaturschwankungen und gegen die Einwirkung von Feuchtigkeit und Salzlösungen gefordert. Als Material für die Reibschichten haben sich besonders kurzfaserverstärkte oder faserarme keramische Werkstoffe bewährt. Auch hier sind Werkstoffe bevorzugt, deren Matrix Siliciumcarbid enthält, insbesondere in Kombination mit geringen Anteilen an Kohlenstoff und an elementarem Silicium.

Als "faserarm" werden hier Werkstoffe bezeichnet, deren Massenanteil an Verstärkungsfasern nicht mehr als 45 % beträgt. Als Kurzfasern werden hier Fasern bezeichnet, deren mittlere Länge unter 5 mm liegt, bevorzugt beträgt sie 0,1 mm bis 4,5 mm, und insbesondere 0,3 mm bis 4 mm.

Wegen der unterschiedlichen Werkstoffzusammensetzung ergeben sich für diese bevorzugten Materialien unterschiedliche thermische Ausdehnungskoeffizienten. Dies führt bei den für Bremsscheiben typischen zyklischen thermischen Belastungen zu Spannungen, die zunächst zu Mikrorissen und sogar zu makroskopischen Schäden und Versagen des Bauteils führen können.

Es ist zwar möglich, durch unterschiedliche Zusätze in den Werkstoffen die thermischen Ausdehnungskoeffizienten anzugleichen, jedoch ist das immer nur für einen begrenzten Temperaturbereich möglich.

Es ist daher die Aufgabe, ein Verfahren zur Herstellung von Carbon-Keramik-Bremsscheiben anzugeben, bei dem solche Spannungen verringert werden, ohne dabei die geforderten mechanischen, thermischen und tribologischen Eigenschaften zu verschlechtern.

Diese Aufgabe wird durch die Merkmale des Patentanspruch 1 gelöst.

Verfahren zur Herstellung von Carbon-Keramik-Bremsscheiben, die mehrere Schichten umfassen, wobei mindestens eine Schicht als Tragkörper dient und mindestens eine Schicht als Reibschicht fungiert, wobei die Reibschicht Kurzfasern mit einer mittleren Länge von weniger als 5 mm enthält, und wobei der Tragkörper Verstärkungsfasern enthält, die Langfasern mit einer mittleren Länge von mindestens 5 mm aus Kohlenstoff sind, einen Massenanteil an Siliciumcarbid von 30 % bis 70 %, einen Massenanteil an Silicium von 5 % bis 20 %, und einen Massenanteil an Kohlenstoff von 20 % bis 60 % aufweist, und wobei ein Massenanteil von 30 % bis 70 % des Massenanteils an Kohlenstoff von den Verstärkungsfasern herrührt, und wobei der Tragkörper und mindestens eine Reibschicht durch eine Zwischenschicht getrennt sind, die Verstärkungsfasern in Form von Faserbündeln aufweist, wobei die Faserbündel der Zwischenschicht von einer Schicht aus einer Mischung von Siliciumcarbid, Silicium und Kohlenstoff umgeben sind, bei dem in eine Pressform nacheinander eine Pressmasse als Vorläufer für die mindestens eine Reibschicht, eine Pressmasse als Vorläufer für die mindestens eine Zwischenschicht, eine Pressmasse als Vorläufer für den Tragkörper, eine Pressmasse als Vorläufer für eine weitere Zwischenschicht und schließlich eine Pressmasse als Vorläufer für eine weitere Reibschicht eingefüllt werden, wobei die Pressmassen carbonisierbare organische Bindemittel enthalten, die Schichten unter Einwirkung von Temperatur und Druck gehärtet werden, der entstandene Grünkörper bei einer Temperatur von 750 °C bis 1300 C in Abwesenheit von Oxydationsmitteln carbonisiert wird, wobei das in den Pressmassen enthaltene organische Bindemittel im wesentlichen zu Kohlenstoff umgewandelt wird, und anschließendes Umsetzen zumindest eines Teils des Kohlenstoffs in dem carbonisierten Grünkörper durch Einwirkung von Silicium enthaltenden carbidbildenden Elementen zu Carbiden dieser Elemente, bei einer Temperatur von mindestens 10 K über der Schmelztemperatur des betreffenden Elements oder einer Mischung von mehreren solcher Elemente, bis zu 400 K über der Schmelztemperatur des betreffenden Elements oder der betreffenden Mischung von mehreren solcher Elemente, dadurch gekennzeichnet, dass zur Herstellung der Zwischenschicht eine Pressmasse eingesetzt wird, die eine Mischung aus partikulärem Silicium, carbonisierbaren Harzen oder Pechen oder deren Mischungen und beschichteten Faserbündeln ist, wobei diese Beschichtung enthaltend Kohlenstoff, Siliciumcarbid und Silicium gebildet wird durch thermische Behandlung von Faserbündeln beschichtet mit einer Mischung aus Silicium-Pulver und einem carbonisierbaren Harz oder einem carbonisierbaren Pech, bei einer Temperatur von 900 °C bis 1700 °C unter Ausschluss von Oxydationsmitteln.

Im Fall der Verwendung von Silicium als carbidbildendem Element ist der Temperaturbereich bevorzugt 1420 °C bis zu 1800 °C.

Es ist auch möglich, der Reibschicht entsprechende gehärtete oder carbonisierte Grünkörper separat herzustellen und gemeinsam mit den Preßmassen für die übrigen Schichten zu verpressen, ebenso ist es möglich, den gehärteten oder carbonisierten Grünkörper für den Tragkörper separat herzustellen und gemeinsam mit den Preßmassen für Reibschicht und Zwischenschicht zu verpressen.

Der Tragkörper ist ein mit Langfasern verstärkter keramischer Werkstoff, dessen Matrix bevorzugt Siliciumcarbid enthält, insbesondere in Kombination mit geringen Anteilen an Kohlenstoff und an elementarem Silicium. Bevorzugt werden als Verstärkungsfasern solche aus Kohlenstoff eingesetzt. Der Massenanteil in einem solchen Werkstoff ist dabei für Siliciumcarbid von 30 % bis 70 %, bevorzugt von 35 % bis 65 %, und insbesondere von 40 % bis 60 %. Der Massenanteil in dem Werkstoff an Kohlenstoff ist von 20 % bis 60 %, bevorzugt von 25 % bis 55 %, und besonders bevorzugt von 30 % bis 50 %; wobei zwischen 30 und 70 % dieses Massenanteils an Kohlenstoff von den Verstärkungsfasern herrühren. Der Massenanteil an Silicium in dem Werkstoff ist von 5 % bis 20 %, bevorzugt von 8 % bis 17 %. Der mittlere thermische Ausdehnungskoeffizient des Werkstoffs für den Tragkörper beträgt zwischen 1 $\mu$m/(m·K) und 4 $\mu$m/(m·K), wobei wegen der bevorzugten Orientierung der Verstärkungsfasern im Tragkörper parallel zur Deckfläche des Zylinderrings der mittlere thermische Ausdehnungskoeffizient parallel zu der Deckfläche von 1 $\mu$m/(m·K) bis 2,5 $\mu$m/(m·K) beträgt. Insbesondere ist der thermische Ausdehnungskoeffizient zwischen 1,2 $\mu$m/(m·K) und 2,3 $\mu$m/(m·K), bevorzugt zwischen 1,4 $\mu$m/(m·K) und 2,1 $\mu$m/(m·K).

Die Reibschicht enthält bevorzugt Verstärkungsfasern in Form von Kurzfasern, mit einer mittleren Länge von weniger als 5 mm, besonders bevorzugt bis zu 3 mm, und insbesondere bis zu 2 mm, wobei der Massenanteil der Verstärkungsfasern in der Reibschicht bevorzugt von 5 % bis 45 % beträgt, besonders bevorzugt 10 % bis zu 40 %, und insbesondere 15 % bis zu 35 %. Auch hier sind Fasern aus Kohlenstoff bevorzugt. Der mittlere thermische Ausdehnungskoeffizient der Reibschicht beträgt zwischen 2,5 $\mu$m/(m·K) und 5 $\mu$m/(m·K), bevorzugt zwischen 2,7 $\mu$m/(m·K) und 4,8 $\mu$m/(m·K), und insbesondere 2,9 $\mu$m/(m·K) bis 4,6 $\mu$m/(m·K). Es ist auch möglich, keine Verstärkungsfasern in der Reibschicht einzusetzen, sondern inerte Füllstoffe wie alpha-Siliciumcarbid, Borcarbid, und Metallcarbide wie Titancarbid, Wolframcarbid, Eisencarbide und partikulären Kohlenstoff. Selbstverständlich können die genannten Füllstoffe auch mit Verstärkungsfasern kombiniert eingesetzt werden.

Die Zwischenschicht weist, wie oben bereits ausgeführt, Verstärkungsfasern in Form von Faserbündeln auf, wobei die Faserbündel von einer Schicht aus einer Mischung von Siliciumcarbid, Silicium und Kohlenstoff umgeben sind. Diese Schicht läßt sich durch thermische Behandlung von Faserbündeln herstellen, die mit einer Mischung aus Silicium-Pulver, bevorzugt in einem Massenanteil von 10 % bis 45 % in der Mischung, und einem carbonisierbaren Harz oder carbonisierbaren Pech beschichtet werden und anschließend bei einer Temperatur von 900 °C bis 1700 °C unter Ausschluß von Oxydationsmitteln behandelt werden. Dabei wird zunächst das Harz oder das Pech durch Carbonisierung in Kohlenstoff umgewandelt, der anschließend mit dem Silicium unter Bildung von Siliciumcarbid reagiert. Unter den carbonisierbaren Harzen werden Phenolharze bevorzugt. Eine weitere bevorzugte Variante ist es, zusätzlich Siliciumcarbid in der alpha-Modifikation als Bestandteil dieser Mischung einzusetzen, insbesondere in einem Massenanteil von 5 % bis 30 % in der Mischung.

Es wurde gefunden, daß durch eine derartige Beschichtung von Verstärkungsfaserbündeln, insbesondere solchen aus Kohlenstoff, und Mischen von so beschichteten Faserbündeln mit Bindemitteln wie Phenolharzen, Pechen, Furanharzen, oder Mischungen dieser Bindemittel, besonders in Kombination mit den genannten Füllstoffen, der mittlere thermische Ausdehnungskoeffizient des daraus hergestellten keramischen Werkstoffs gezielt eingestellt werden kann. Dabei kann der mittlere thermische Ausdehnungskoeffizient sowohl durch Art und Menge der Beschichtung als auch durch das Verhältnis der Masse des Bindemittels zu der Masse der beschichteten Faserbündel und gegebenenfalls der weiteren Zusatzstoffe gezielt eingestellt werden. Je nach Zusammensetzung der Zwischenschicht lassen sich Werte für den thermischen Ausdehnungskoeffizienten von 1,7 $\mu$m/(m·K) und 4,5 $\mu$m/(m·K) einstellen. Dabei ist es bevorzugt, eine Wert für den thermischen Ausdehnungskoeffizienten zu wählen, der etwa dem Mittelwert der thermischen Ausdehnungskoeffizienten von dem des Tragkörpers und von dem der Reibschicht entspricht. Überraschenderweise hat sich auch ergeben, daß durch die spezielle Beschichtung der Faserbündel auch bei hohen thermischen Ausdehnungskoeffizienten die Neigung zur Rißbildung in der diese Faserbündel enthaltenden Zwischenschicht selbst bei raschen Temperaturwechseln weitgehend unterdrückt wird.

Besonders vorteilhaft wirken Beschichtungen dieser Verstärkungsfaserbündel, die Mischungen von Phenolharzen mit partikulärem Silicium enthalten. Dabei ist es günstig, mehrere, also mindestens zwei derartige Beschichtungen nacheinander und übereinander auf die Verstärkungsfaserbündel aufzubringen.

Auf Basis dieser beschichteten Bündel von Verstärkungsfasern werden Preßmassen für die Zwischenschicht hergestellt, die neben diesen beschichteten Verstärkungsfaserbündeln noch eine Mischung aus partikulärem Silicium, carbonisierbaren Harze oder Pechen oder deren Mischungen enthalten sowie gegebenenfalls Füllstoffe ausgewählt aus der Gruppe alpha-Siliciumcarbid, Borcarbid, und Metallcarbiden wie Titancarbid, Wolframcarbid, Eisencarbiden, und partikulärem Kohlenstoff.

Die Preßmassen für Tragkörper und Reibschichten entsprechen in ihrer Zusammensetzung bevorzugt denen, die aus der DE 101 31 769 bekannt sind.

Als "partikulär" werden Pulver mit einer Teilchengröße von 50 nm bis 1 mm bezeichnet.

Als "carbonisierbar" werden Bindemittel, also Harze und Peche und deren Mischungen, bezeichnet, wenn sie beim Erhitzen unter Ausschluß von Oxydationsmitteln auf Temperaturen von 1100 °C bis 1700 °C einen Rückstand von mindestens 10 % ihrer ursprünglichen Masse ergeben, wobei dieser Rückstand im wesentlichen, also zu mehr als 50 %, aus Kohlenstoff besteht.

Als "Faserbündel" werden im wesentlichen parallel zueinander angeordnete Kurzfasern mit einer mittleren quadratischen Winkelabweichung

$$a = \sum (n_i \cdot \alpha_i^2) / \sum n_i$$

von bis zu 0,2 bezeichnet, wobei $\alpha_i$ der Winkel der Abweichung einer Faser von dem mittleren Orientierungswinkel $< \alpha >$ ist, gemessen in Winkelgraden (Vollwinkel = 360°), und $n_i$ die Anzahl aller Fasern mit diesem Abweichungswinkel. Die mittlere Faserlänge der Verstärkungsfasern in den Faserbündeln der Zwischenschicht beträgt bevorzugt 0,3 mm bis 20 mm, besonders bevorzugt 0,1 mm bis 30 mm, und insbesondere 0,5 mm bis 15 mm. Der mittlere Durchmesser der Faserbündel beträgt bevorzugt 300 $\mu$m bis 400 $\mu$m, bei einem Durchmesser der Einzelfasern von bevorzugt 4 $\mu$m bis 12 $\mu$m, besonders bevorzugt 5 $\mu$m bis 10 $\mu$m, und insbesondere 6 $\mu$m bis 8 $\mu$m. Die Dicke der Beschichtung auf den Faserbündeln nach der thermischen Behandlung beträgt bevorzugt 5 % bis 80 % des Durchmessers der Faserbündel, besonders bevorzugt 10 % bis 60 %.

Bevorzugt ist ein symmetrischer Aufbau einer Carbon-Keramik-Bremsscheibe, wobei auf den zentralen Tragkörper in Form eines Zylinderrings auf jede Deckfläche eine Zwischenschicht aufgebracht ist, und auf der Zwischenschicht auf jeder vom Tragkörper abgewandten Seite eine Reibschicht. Es ist weiter bevorzugt, daß im Inneren des Tragkörpers Kühlkanäle verlaufen, deren Längsachse in der Ebene parallel zu den Deckflächen verläuft, und die zum äußeren Perimeter und zum inneren Perimeter des Zylinderrings hin offen sind. Bei einer Carbon-Keramik-Bremsscheibe mit beispielsweise einer Gesamtdicke von 34 mm entfallen auf die Reibschichten jeweils Dicken zwischen 0,8 mm und 2 mm, bevorzugt 0,9 bis 1,7 mm, auf die Zwischenschichten darunter jeweils 0,3 bis 3 mm, bevorzugt 0,8 bis 2,5 mm, und auf die Tragschicht oder den Tragkörper eine Dicke von 24 mm bis 31,4 mm. Die Höhe der Kühlkanäle in axialer Richtung der zylinderringförmigen Carbon-Keramik-Bremsscheibe ist bevorzugt ein Drittel der Dicke der Tragschicht, also bevorzugt 8 mm bis 10,5 mm.

## Patentansprüche

1. Verfahren zur Herstellung von Carbon-Keramik-Bremsscheiben, die mehrere Schichten umfassen, wobei mindestens eine Schicht als Tragkörper dient und mindestens eine Schicht als Reibschicht fungiert, wobei die Reibschicht Kurzfasern mit einer mittleren Länge von weniger als 5 mm enthält, und wobei der Tragkörper Verstärkungsfasern enthält, die Langfasern mit einer mittleren Länge von mindestens 5 mm aus Kohlenstoff sind, einen Massenanteil an Siliciumcarbid von 30 % bis 70 %, einen Massenanteil an Silicium von 5 % bis 20 %, und einen Massenanteil an Kohlenstoff von 20 % bis 60 % aufweist, und wobei ein Massenanteil von 30 % bis 70 % des Massenanteils an Kohlenstoff von den Verstärkungsfasern herrührt, und wobei der Tragkörper und mindestens eine Reibschicht durch eine Zwischenschicht getrennt sind, die Verstärkungsfasern in Form von Faserbündeln aufweist, wobei die Faserbündel der Zwischenschicht von einer Schicht aus einer Mischung von Siliciumcarbid, Silicium und Kohlenstoff umgeben sind, bei dem in eine Pressform nacheinander eine Pressmasse als Vorläufer für die mindestens eine Reibschicht, eine Pressmasse als Vorläufer für die mindestens eine Zwischenschicht, eine Pressmasse als Vorläufer für den Tragkörper, eine Pressmasse als Vorläufer für eine weitere Zwischenschicht und schließlich eine Pressmasse als Vorläufer für eine weitere Reibschicht eingefüllt werden, wobei die Pressmassen carbonisierbare organische Bindemittel enthalten, die Schichten unter Einwirkung von Temperatur und Druck gehärtet werden, der entstandene Grünkörper bei einer Temperatur von 750 °C bis 1300 C in Abwesenheit von Oxydationsmitteln carbonisiert wird, wobei das in den Pressmassen enthaltene organische Bindemittel im wesentlichen zu Kohlenstoff umgewandelt wird, und anschließendes Umsetzen zumindest eines Teils des Kohlenstoffs in dem carbonisierten Grünkörper durch Einwirkung von Silicium enthaltenden carbidbildenden Elementen zu Carbiden dieser Elemente, bei einer Temperatur von mindestens 10 K über der Schmelztemperatur des betreffenden Elements oder einer Mischung von mehreren solcher Elemente, bis zu 400 K über der Schmelztemperatur des betreffenden Elements oder der betreffenden Mischung von mehreren solcher Elemente, **dadurch gekennzeichnet, dass** zur Herstellung der Zwischenschicht eine Pressmasse eingesetzt wird, die eine Mischung aus partikulärem Silicium, carbonisierbaren Harzen oder Pechen oder deren Mischungen und beschichteten Faserbündeln ist, wobei diese Beschichtung enthaltend Kohlenstoff, Siliciumcarbid und Silicium gebildet wird durch thermische Behandlung von Faserbündeln beschichtet mit einer Mischung aus Silicium-Pulver und einem carbonisierbaren Harz oder einem carbonisierbaren Pech, bei einer Temperatur von 900 °C bis 1700 °C unter Ausschluss von Oxydationsmitteln.

2. Verfahren nach Anspruch 1, **dadurch gekennzeichnet, dass** Silicium als carbidbildendes Element eingesetzt wird.

3. Verfahren nach Anspruch 1, **dadurch gekennzeichnet, dass** die Faserbündel zur Herstellung der Zwischenschicht mit einer Zusammensetzung beschichtet werden, die ein Phenolharz und Siliciumpulver mit einer Korngrößenverteilung von 0,05 :m [0,05 Mikrometer] bis 1000 :m [1000 Mikrometer] enthält, und die so beschichteten Faserbündel bei einer Temperatur von 900 °C bis 1700 °C unter Ausschluss von Oxydationsmitteln behandelt werden, wobei das Material der Beschichtung umgewandelt wird in eine Mischung von Siliciumcarbid, Kohlenstoff und Silicium, unter Carbonisierung des Phenolharzes und zumindest teilweise Reaktion des Silicium mit durch die Carbonisierung gebildeten Kohlenstoff zu Siliciumcarbid.

4. Verfahren nach Anspruch 3, **dadurch gekennzeichnet, dass** der Massenanteil an Siliciumpulver in der Beschichtungszusammensetzung für die Faserbündel von 10 % bis 45 % beträgt.

5. Verfahren nach Anspruch 3, **dadurch gekennzeichnet, dass** die Beschichtungszusammensetzung zusätzlich alpha-Siliciumcarbidpulver in einem Massenanteil von 5 % bis 30 % enthält.

6. Verfahren nach Anspruch 1, bei dem der thermische Ausdehnungskoeffizient der Zwischenschicht in einem Bereich von 1,7 $\mu$m/(m K) [1,7 Mikrometer geteilt durch das Produkt von Meter und Kelvin] bis 4,5 $\mu$m/(m K) [4,5 Mikrometer geteilt durch das Produkt von Meter und Kelvin] durch Wahl von Art und Menge der Beschichtung der Faserbündel der Zwischenschicht und durch das Verhältnis der Masse des Bindemittels zur Masse der beschichteten Faserbündel und gegebenenfalls weiterer Zusatzstoffe so eingestellt wird, daß er dem Mittelwert der thermischen Ausdehnungskoeffizienten von dem des Tragkörpers und von dem der Reibschicht entspricht, wobei die Reibschicht Kurzfasern mit einer mittleren Länge von weniger als 5 mm enthält, und wobei der Tragkörper Verstärkungsfasern aus Kohlenstoff mit einer mittleren Länge von mindestens 5 mm, einen Massenanteil an Siliciumcarbid von 30 % bis 70 %, einen Massenanteil an Silicium von 5 % bis 20 %, und einen Massenanteil an Kohlenstoff von 20 % bis 60 % aufweist, und wobei ein Massenanteil von 30 % bis 70 % des Massenanteils an Kohlenstoff von den Verstärkungsfasern herrührt.

7. Verfahren nach Anspruch 1, **dadurch gekennzeichnet, dass** die Dicke der Zwischenschicht von 0,3 mm bis 3 mm beträgt.

8. Verfahren nach Anspruch 1, **dadurch gekennzeichnet, dass** die mittlere Faserlänge der Verstärkungsfasern in den Faserbündeln der Zwischenschicht 0,3 mm bis 20 mm beträgt.

9. Verfahren nach Anspruch 1, **dadurch gekennzeichnet, dass** die die Faserbündel der Zwischenschicht umgebende Schicht zusätzlich alpha-Siliciumcarbid enthält.

10. Verfahren nach Anspruch 1, **dadurch gekennzeichnet, dass** die Reibschicht Kurzfasern mit einer mittleren Länge von bis zu 3 mm enthält.

**Claims**

1. Method for producing carbon-ceramic brake disks comprising multiple layers, whereby at least one layer is a support body and at least one layer acts as a friction layer, whereby the friction layer contains short fibers with an average length of less than 5 mm, in which the supporting body contains reinforcement fibers that are long fibers with an average length of at least 5 mm of carbon, a mass fraction of silicon carbide of 30 % to 70 %, a mass fraction of silicon of 5 % to 20 % and a mass fraction of carbon of 20 % to 60 %, and whereby a mass fraction of 30 % to 70 % of the mass fraction of the reinforcement fibers are carbon, and whereby the supporting body and at least one friction layer are separated by an interlayer, which has reinforcement fibers in the form of fiber bundles, whereby the fiber bundles of the interlayer are surrounded by a mixture of silicon carbide, silicon and carbon, during which in a mold in succession, a molding compound as a precursor for the at least one friction layer, a molding compound as a precursor for the at least one intermediate layer, a molding compound as a precursor for the support body, ultimately a molding compound can be filled as a precursor for another friction layer, wherein the molding compositions contain carbonizable organic binders, the layers are cured under the influence of temperature and pressure, and the resulting green body carbonized at a temperature of 750 °C to 1300 °C in the absence of oxidizing agents, wherein the carbonizable organic binder contained in the molding compounds is converted substantially to carbon and ultimately the conversion of at least part of the carbon in the carbonized green body through the effects of the carbide-forming elements containing silicon to form carbides of these elements, at a temperature of at least 10 K above the melting temperature of the element or a mixture of several such elements, up to 400 K above the melting temperature of the element or a mixture of several such elements. This is **characterized in that** a molding mass is used for the production of the intermediate layer, which is a mixture of particular silicon, carbonizable resin or pitch or a mixture thereof, and coated fiber bundles, whereby this coating containing carbon, silicon carbide and silicon is formed through the heat treatment of fiber bundles coated with a mixture of silicon powder and a carbonizable resin or a carbonizable pitch at a temperature from 900 °C to 1700 °C with the exclusion of oxidation agents.

2. Method pursuant to claim 1, **characterized in that** silicon is used as the carbide forming element.

3. A method according to claim 1, **characterized in that** the fiber bundle for manufacture of the intermediate layer with a composition to be coated comprising a phenolic resin and silicon powder having a particle size distribution of from 0.05 $\mu$m [0.05 micrometers] containing to 1000 $\mu$m [1000 micrometers], and the thus-coated fiber bundles are treated at a temperature of 900 °C to 1700 °C in the absence of oxidizing agents, wherein the material of the coating is converted into a mixture of silicon carbide, carbon and silicon, under carbonization of the phenolic resin and at least partial reaction of the silicon formed by the carbonization of carbon to silicon carbide.

4. A method according to claim 3, **characterized in that** the mass fraction of silicon powder in the coating composition for the bundles of fibers ranges from 10 % to 45 %.

5. A method according to claim 3, **characterized in that** the coating composition additionally contains alpha-silicon carbide powder in a mass fraction of 5 % to 30 %.

6. Method pursuant to claim 1, in which the thermal expansion coefficient of the interlayer falls within a range from 1.7 $\mu$m (mK) [1.7 micrometers divided by the product from of the meter and Kelvin] up to 4.5 $\mu$m/(mK) [4.5 micrometers divided by the product of meters and Kelvin] through the selection of the type and amount of coating of the fiber bundles of the interlayer and by the ratio of the mass of the binder to the mass of the coated fiber bundle and any additional additives, that the average value of the thermal expansion coefficient of which the supporting body and that of the friction layer, whereby the friction layer has short fibers with an average length of less than 5 mm, and whereby the supporting body has reinforcement fibers of carbon with an average length of at least 5 mm, a mass fraction of silicon carbide of 30 % to 70 %, a mass fraction of silicon of 5 % to 20 % and a mass fraction of carbon of 20 % to 60 %, and whereby a mass fraction of 30 % to 70 % of the mass fraction of carbon comes from the reinforcement fibers.

7. Method pursuant to claim 1, **characterized in that** the thickness of the interlayer is 0.3 mm to 3 mm.

8. Method pursuant to claim 1, **characterized in that** the average fiber length of the reinforcement fibers in the fiber bundles in the interlayer is 0.3 mm to 20 mm.

9. Method pursuant to claim 1, **characterized in that** the surrounding layer of the fiber bundle of the interlayer additionally contains alpha-silicon carbide.

10. Method pursuant to claim 1, **characterized in that** the friction layer has short fibers with an average length of up to 3 mm.

**Revendications**

1. Procédé de fabrication de disques de frein en carbone-céramique qui comprennent plusieurs couches, dans lequel au moins une couche sert de support et au moins une couche fonctionne comme couche de frottement, dans lequel la couche de frottement contient des fibres courtes d'une longueur moyenne de moins de 5 mm, et dans lequel le support contient des fibres de renfort qui sont des fibres longues en carbone d'une longueur moyenne d'au moins 5 mm et qui présentent un pourcentage massique de carbure de silicium compris entre 30 % et 70 %, un pourcentage massique de silicium compris entre 5 % et 20 % et un pourcentage massique de carbone compris entre 20 % et 60 %, et dans lequel un pourcentage massique compris entre 30 % et 70 % du pourcentage massique de carbone provient des fibres de renfort, et dans lequel le support et au moins une couche de frottement sont séparés par une couche intermédiaire qui comporte des fibres de renfort sous la forme de faisceaux de fibres, dans lequel les faisceaux de fibres de la couche intermédiaire sont entourés par une couche d'un mélange de carbure de silicium, de silicium et de carbone, selon lequel un moule est rempli successivement d'une matière à mouler par compression en tant que précurseur de l'au moins une couche de frottement, d'une matière à mouler par compression en tant que précurseur de l'au moins une couche intermédiaire, d'une matière à mouler par compression en tant que précurseur du support, d'une matière à mouler par compression en tant que précurseur d'une autre couche intermédiaire et enfin d'une matière à mouler par compression en tant que précurseur d'une autre couche de frottement, dans lequel les matières à mouler par compression contiennent des liants organiques carbonisables, les couches sont durcies sous l'action de la température et de la pression, l'ébauche créée est carbonisée à une température comprise entre 750 °C et 1300 °C en l'absence d'agents oxydants, dans lequel le liant organique contenu dans les matières à mouler par compression est globalement transformé en carbone, puis transformation d'au moins une partie du carbone dans l'ébauche carbonisée par action d'éléments contenant du silicium et formant des carbures en carbures de ces éléments, à une température d'au moins 10 K au-dessus de la température de fusion de l'élément concerné ou d'un mélange de plusieurs de ces éléments, jusqu'à 400 K au-dessus de la température de fusion de l'élément concerné ou du mélange concerné de plusieurs de ces éléments, **caractérisé en ce que**, pour fabriquer la couche intermédiaire, on utilise une matière à mouler par compression qui est un mélange de silicium particulaire, de résines ou poix carbonisables ou de leurs mélanges et de faisceaux de fibres revêtus, dans lequel ce revêtement contenant du carbone, du carbure de silicium et du silicium est formé par traitement thermique de faisceaux de fibres revêtus d'un mélange de poudre de silicium et d'une résine carbonisable ou d'une poix carbonisable, à une température comprise entre 900 °C et 1700 °C à l'exclusion d'agents oxydants.

2. Procédé selon la revendication 1, **caractérisé en ce que** l'on utilise du silicium comme élément formant des carbures.

3. Procédé selon la revendication 1, **caractérisé en ce que** les faisceaux de fibres destinés à la fabrication de la couche intermédiaire sont revêtus d'une composition qui contient une résine phénolique et une poudre de silicium avec une répartition granulométrique comprise entre 0,05 $\mu$m [0,05 micromètres] et 1000 $\mu$m [1000 micromètres], et les faisceaux de fibres ainsi revêtus sont traités à une température comprise entre 900 °C et 1700 °C à l'exclusion d'agents oxydants, dans lequel la matière du revêtement est transformée en un mélange de carbure de silicium, de carbone et de silicium, avec carbonisation de la résine phénolique et avec une réaction au moins partielle du silicium avec du carbone formé par la carbonisation pour donner du carbure de silicium.

4. Procédé selon la revendication 3, **caractérisé en ce que** le pourcentage massique de poudre de silicium dans la composition de revêtement pour les faisceaux de fibres est compris entre 10 % et 45 %.

5. Procédé selon la revendication 3, **caractérisé en ce que** la composition de revêtement contient en plus de la poudre de carbure de silicium alpha dans un pourcentage massique compris entre 5 % et 30 %.

6. Procédé selon la revendication 1, selon lequel le coefficient de dilatation thermique de la couche intermédiaire est réglé dans une plage allant de 1,7 $\mu$m/(m.K) (1,7 micromètres divisés par le produit du mètre et du Kelvin) à 4,5 $\mu$m/(m.K) (4,5 micromètres divisés par le produit du mètre et du Kelvin) grâce au choix de la nature et de la quantité du revêtement des faisceaux de fibres de la couche intermédiaire et au rapport de la masse du liant à la masse des faisceaux de fibres revêtus et le cas échéant d'autres adjuvants de telle sorte qu'il correspond à la valeur moyenne des coefficients de dilatation thermique du support et de la couche de frottement, dans lequel la couche de frottement contient des fibres courtes d'une longueur moyenne de moins de 5 mm, et dans lequel le support contient des fibres de renfort en carbone d'une longueur moyenne d'au moins 5 mm, un pourcentage massique de carbure de silicium compris entre 30 % et 70 %, un pourcentage massique de silicium compris entre 5 % et 20 % et un pourcentage massique de carbone compris entre 20 % et 60 %, et dans lequel un pourcentage massique compris entre 30 % et 70 % du pourcentage massique de carbone provient des fibres de renfort.

7. Procédé selon la revendication 1, **caractérisé en ce que** l'épaisseur de la couche intermédiaire est comprise entre 0,3 mm et 3 mm.

8. Procédé selon la revendication 1, **caractérisé en ce que** la longueur de fibres moyenne des fibres de renfort dans les faisceaux de fibres de la couche intermédiaire est comprise entre 0,3 mm et 20 mm.

9. Procédé selon la revendication 1, **caractérisé en ce que** la couche entourant les faisceaux de fibres de la couche intermédiaire contient en plus du carbure de silicium alpha.

10. Procédé selon la revendication 1, **caractérisé en ce que** la couche de frottement contient des fibres cour-

**EP 1 783 395 B1**

tes d'une longueur moyenne allant jusqu'à 3 mm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4438455 C1
- WO 9941069 A
- DE 10048012 A1
- DE 4438456 A1
- DE 10131769